Europäisches Patentamt

European Patent Office

Office européen des brevets

(19)

(11) Publication number: **0 244 270**
A2

(12)

# EUROPEAN PATENT APPLICATION

(21) Application number: 87303964.8

(22) Date of filing: 01.05.87

(51) Int. Cl.⁴: **B 62 D 1/04**

(30) Priority: 01.05.86 GB 8610684

(43) Date of publication of application:
04.11.87 Bulletin 87/45

(84) Designated Contracting States:
AT BE CH DE ES FR GB GR IT LI LU NL SE

(71) Applicant: Moto-Lita Limited
Thruxton Racing Circuit
Thruxton Airport Nr. Andover Hants. SP11 8PQ (GB)

(72) Inventor: Green, Simon Richard
Hazeldown Farm Longstock
Nr. Stockbridge Hampshire (GB)

(74) Representative: Mayes, Stuart David et al
BOULT, WADE & TENNANT 27 Furnival Street
London, EC4A 1PQ (GB)

(54) Improvements in vehicle steering wheels.

(57) A vehicle steering wheel has a pair of substantially straight sections (10c, 10d) of the rim (10) for a comfortable, relaxed grip by the driver's hands and locations (24) are provided towards the upper end of the straight sections to serve as a guide for the driver's thumbs to rest in.

FIG.1.

EP 0 244 270 A2

**Description**

IMPROVEMENTS IN VEHICLE STEERING WHEELS

This invention relates to a vehicle steering wheel and in particular, though not exclusively, to a steering wheel for an automobile.

Steering wheel design has changed little since the days of the earliest motor car, despite dramatic advances in other areas of automobile design. Alternative designs have been proposed, such as the radically different proposal is in US Patent Specification No. 1476347 or the more customised style of wheel exemplified in US Patent Specification No. 4161892, but to Applicants knowledge such designs have not been utilised commercially.

One of the problems with the wheel shown in US 1476347 is that whereas there may be clearance for the driver's legs in the position of the wheel shown, there will be significantly less leg room when the wheel is turned through 180°. The fact that the wheel rim is made up of a number of straight segments which adjoin at abrupt corners and which are all spaced by differing amounts from the central axis will make it very difficult for a driver to let the wheel feed through his hands when cornering. The fact that the wheel provides resting bars for supporting the driver's wrists suggests that the wheel of US 1476347 must be used in a relatively flat plane, while in most automobiles of today the plane of the steering wheel is relatively upright.

The wheel shown in US 4161892 provides projections on the outside of the rim which are intended to provide rests for the edges of the driver's hands. However, the driver will gain no benefit from this design if his hands are too small, and if his hands are too big, he will probably suffer discomfort instead. With the wheel of US 4161892, the driver's hands are encouraged to grip the wheel at diametrically opposite positions on the rim and with the palms of his hands parallel, which has the disadvantage of not being consistent with the most comfortable position for the driver's wrists.

It is a primary object of the present invention to bring steering wheel design into line with modern day considerations of improved driver comfort and safety.

The present invention provides a vehicle steering wheel having a continuous rim which is generally annular about an axis of rotation, at least one spoke connected to and extending radially inwardly from said rim to the said axis of rotation of the rim, and means for connecting said spoke to the steering column of a vehicle so that the axis of rotation of the rim is coincident with the axis of rotation of the steering column, in which two sections of the rim are substantially straight, said sections being arranged slanting inwardly towards each other in the sense that when the wheel is in use in the straight ahead driving position, said sections are upwardly convergent, characterised in that the two said sections are located on the rim so that a diameter through said axis of rotation of the rim intersects each said section with major proportions of each said section lying on the same side of said diameter, said major proportions of said sections lying above said diameter, and in that means is provided on the rim to guide the thumbs of a driver, said thumb guide means comprising projections extending radially inwardly from each said section of the rim at a position towards the upper end of each said section, the junction of the inner surface of the rim with the upper surface of each said projection providing a location for the driver's thumb to rest in while the driver's hands grip the rim, said substantially straight sections of the rim extending sufficiently far below the projections that when the driver's thumbs are resting in the projections, the grip of the driver's hands on the wheel does not extend beyond the substantially straight sections of the rim.

With the steering-wheel of this invention, the driver's hands are able to rest more comfortably on the wheel by the provision of the substantially straight sections of the rim. The driver is able to have a more natural and relaxed grip, although without any loss of feeling of control. With a more relaxed grip, the driver suffers less from fatigue. The driver is able readily and automatically to take up the improved grip on the wheel of this invention due to the provision of the guide means providing a location for the driver's thumbs to rest in. The steering wheel of this invention does not have to be tailored to suit the hands of a particular driver but is able to suit almost any driver equally effectively.

By way of example, an embodiment of the invention will now be described with reference to the accompanying drawings, in which:

Figure 1 is an elevational view showing a vehicle steering wheel according to the present invention.

Figure 2 is a cross-sectional view along the lines 2-2 of Figure 1.

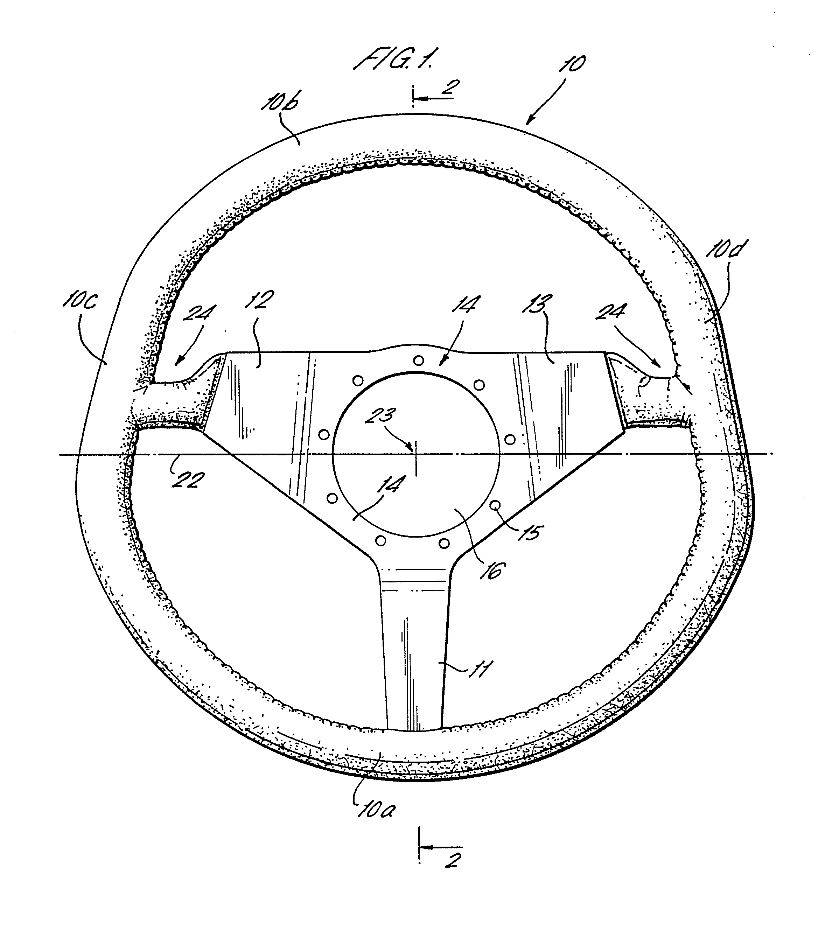

The steering wheel shown in Figure 1 is for an automobile. The wheel has a continuous, generally annular rim 10. Three spokes 11, 12 and 13 extend radially inwardly from the rim 10. The spokes 11, 12 and 13 terminate in a boss 14 at the centre of the wheel. The wheel is mountable to the steering column of a vehicle via the boss 14. For convenience, pre-formed holes 15 are provided in the boss 14 for attachment of the wheel. The wheel may be attached directly to the steering column, where this is possible, or using an adaptor, as is conventionally known. The holes 15 may be to any pattern or, of course, the boss 14 may be supplied blank. A central hole 16 may be provided to receive insignia or for a horn button assembly or the like.

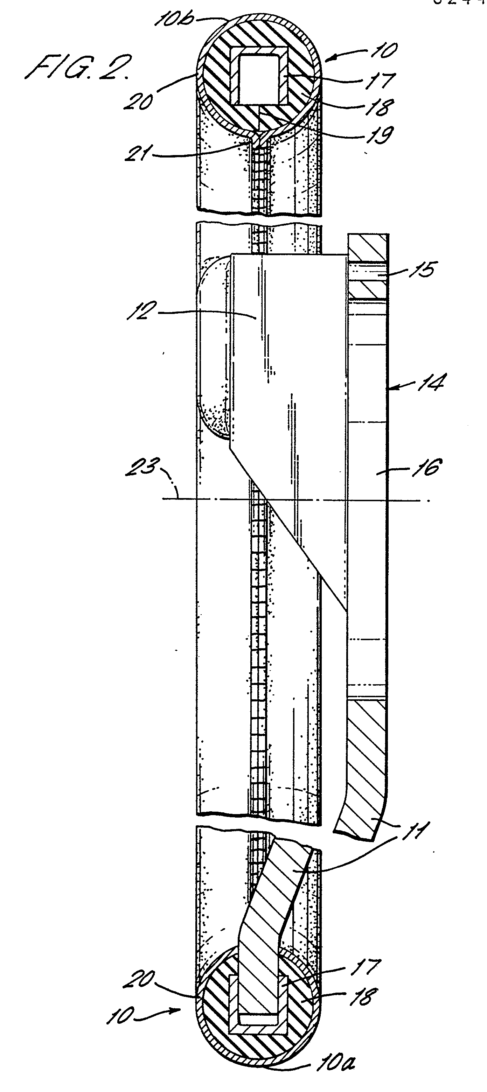

The preferred wheel construction can be seen in Figure 2. The rim 10 is conveniently formed with a core 17 of channel-sectioned rigid material, with the open side of the channel section arranged facing radially inwardly. Typically, the core 17 is made of 1/2″ square aluminium channel having 1/8″ wall thickness.

The diameter of the wheel may typically be about 14″. The three spokes 11, 12 and 13 are conveniently formed integrally from flat rigid sheet material. This may typically be 1/4″ thick aluminium plate. The spokes 11, 12 and 13 may typically be formed by profile cutting or in a pressing. The ends of the spokes 11, 12 and 13 fit within the open channel section of the rim 10 where they are attached, conveniently by welding. This construction of wheel provides a robust structure which is easily strong enough for use, yet sufficiently collapsible in an emergency so as not to cause undue injury to the driver.

Over the core 17 there is placed padding material 18. This is conveniently an extrusion of elastomeric, eg rubber, material. The padding 18 has a square internal hole to suit the core 17 and is split along one side, as at 19, which enables it to be snapped over the fitted onto the core 17. The padding 18 has a circular external section. A covering 20 is placed over the padding 18. The covering 20 may typically be of leather which is fitted by stitching around the inside of the rim 10, as at 21. An advantage of this rim covering is that it provides a comfortable, slightly padded feel and there is no tendency for the grip to slip round on the rim in use.

It will be appreciated, of course, that the wheel may be constructed in many other ways. For example, the wheel may have only one spoke or two or more than three. The spoke or spokes and rim may be formed as an integral unit. The covering may be a simple moulding over the rim.

The spokes 11, 12 and 13 may be flat and lie in the same plane as the rim. Alternatively, the spokes 11, 12 and 13 may be bent or curved so that the boss 14 lies outside the plane of the rim 10, making a so-called "dished" wheel, as indicated in Figure 2.

The rim 10 has two sections 10c, 10d which are substantially straight. These straight sections 10c, 10d are provided at approximately opposite locations on the rim 10. A diameter 20 passing through the central axis 23 of the wheel intersects both straight sections 10c, 10d of the rim 10. A major proportion of each straight section 10c, 10d lies on the same side of the diameter 19, as can be seen in Figure 1. Between the straight sections 10c, 10d, the rim 10 is preferably curved. Preferably the curved sections 10a, 10b between the straight sections 10c, 10d have a common radius of curvature, centred about the axis 23 of the wheel. The straight sections 10c, 10d are arranged slanting relative to each other. When the wheel is in use in the straight ahead driving position, as seen in Figure 1, the straight sections 10c, 10d converge upwardly.

Two of the spokes 12, 13 are connected to the rim 10 at positions towards the upper ends of the substantially straight sections 10c, 10d. The junction of the upper surface of each of the two spokes 12, 13 with the inner surface of the rim 10 provides a location 24 for the thumb of the driver's hand. The upper surface of the spokes 11, 12 is indented at this junction so as to provide a positive guide for the driver's thumbs to rest in. When the driver's thumbs are resting in the thumb locations 24, the driver's hands grip the straight sections 10c, 10d. The straight sections 10c, 10d are made sufficiently long so that there is no overlapping of the driver's hands beyond the straight sections in this position. Typically, the length of the sections 10c, 10d may be about 4 to 4 1/2″. A straight section of rim rests more comfortably in the palm of the hand than a curved rim does, which means that the driver is able to assume a more relaxed natural grip with the wheel of this invention. The effect of this is particularly noticeable over long distance drives where the driver suffers less from fatigue as a result of the more comfortable grip on the wheel. In addition, practical experience of the wheel of this invention reveals that the driver is imbued with a greater feeling of control as a result of the improved grip.

The relative angle between the straight sections 10c, 10d of the rim 10 is desirably chosen so that in the normal driving position, the angle of the driver's wrists is not unnaturally accentuated, but relaxed. A suitable angle between the straight sections 10c, 10d has been found to be between about 10° and 30°, with an optimum angle of around 20° for most automobiles.

The straight sections 10c, 10d, are positioned on the rim 10 so that when the driver is grasping the wheel in the straight ahead driving position and with his thumbs resting in the thumb locations 24, his hands lie generally above the horizontal diameter 22 of the wheel. This position for the hands is not essential. However, many consider this position to be the desirable orthodox driving position as well as the most comfortable. Using the wheel of this invention, a driver is automatically encouraged to adopt this desirable driving position.

The rim covering 20 conveniently extends at least partly over the spokes 12, 13 as seen in Figure 1, in order to cover the thumb locations 24 and make them comfortable.

It will be appreciated that the wheel may be designed with only one spoke, or several spokes in other places. In such cases, the thumb locations 24 could be defined by providing radially inwardly extending projections on the rim 10. In all other respects, however, the wheel would be no different from that described above.

## Claims

1. A vehicle steering wheel having a continuous rim (10) which is generally annular about an axis of rotation (23), at least one spoke (11, 12, 13) connected to and extending radially inwardly from said rim to the said axis of rotation of the rim, and means for connecting said spoke to the steering column of a vehicle so that the axis of rotation of the rim is coincident with the axis of rotation of the steering column, in which two sections (10c, 10d) of the rim are substantially straight, said sections being arranged slanting inwardly towards each other in the sense that when the wheel is in use in the straight ahead driving position, said sections are upwardly convergent, characterised in that the two said sections (10c, 10d) are located on the rim (10) so that a diameter (22) through said axis of rotation (23) of the rim intersects each said section with major proportions of each said section lying on the same side of said diameter, said major proportions of said sections lying above said diameter when the wheel is in use in the straight ahead driving position, and that means (24) is provided on the rim to guide the thumbs of a driver, said thumb guide means (24) comprising projections extending radially inwardly from each said section of the rim at a position towards the upper end of each said section, the junction of the inner surface of the rim with the upper surface of each said projection providing a location for the driver's thumb to rest in while the driver's hands grip the rim, said substantially straight sections of the rim extending sufficiently far below the projections that when the driver's thumbs are resting in the locations, the grip of the driver's hands on the wheel does not extend beyond the substantially straight sections of the rim.

2. A vehicle steering wheel as claimed in Claim 1 wherein the rim (10) comprises a core member (17) of rigid material having a non-circular external section and a covering (18, 20) of non-rigid material having a substantially circular external section.

3. A vehicle steering wheel as claimed in Claim 2 wherein said covering comprises an external layer (20) of flexible material, eg leather, over an intermediate layer (18) of resilient material.

4. A vehicle steering wheel as claimed in Claim 3 wherein said intermediate layer (18) is of extruded elastomeric eg rubber material which has an internal bore shaped to conform with the external section of the core member (17) and which is split (19) to enable it to be snapped over and positioned on said core member.

5. A vehicle wheel as claimed in Claim 2, Claim 3 or Claim 4 wherein said core member (17) is formed from an extrusion, eg of aluminium, having a channel-shaped cross-section, with the open side of the channel section arranged facing radially inwardly.

6. A vehicle steering wheel as claimed in any preceding claim wherein the wheel has at least two said spokes (11, 12, 13) which are connected to said rim (10) towards the upper end of said substantially straight sections (10c, 10d) and providing said projections defining said thumb guide means (24).

7. A vehicle steering wheel as claimed in Claim 6 wherein said rim (10) has a covering (20) and said covering extends from said rim (10) onto said spokes (11, 12, 13) at least over said thumb guide means (24).

8. A vehicle steering wheel as claimed in any preceding claim wherein the non-substantially straight sections (10a, 10b) of the rim (10) are curved.

9. A vehicle steering wheel as claimed in Claim 8 wherein said non-substantially straight sections (10a, 10b) of the rim (10) have a common radius of curvature centred on said axis (23) of the wheel.

10. A vehicle steering wheel as claimed in any preceding claim wherein said substantially straight sections (10c, 10d) are at least about 4″ long.

11. A vehicle steering wheel as claimed in any preceding claim wherein said substantially straight sections (10c, 10d) are slanted relative to each other at an angle of between 10° and 30° and preferably about 20°.

12. A vehicle steering wheel as claimed in any one of Claims 6 to 11 wherein the upper surface of said spokes (11, 12, 13) is indented adjacent the junction of said spokes with said rim (10) to allow the driver's thumbs to rest on said indented upper surfaces of said spokes and against the radially inner surface of the wheel rim.

FIG.1.

FIG.2.